# EUROPEAN PATENT SPECIFICATION

(11) **EP 2 057 089 B1**
(45) Date of publication and mention of the grant of the patent: **05.01.2011**
(21) Application number: 07814196.7
(22) Date of filing: 17.08.2007
(51) Int. Cl.: B65G 47/08, B65G 47/84

(54) **METERING APPARATUS FOR GROUPING AND SPACING ARTICLES WITH INDEPENDENT TOOL DRIVE MEANS**
VORRICHTUNG ZUR ARTIKELEINTEILUNG UND DISTANZIERUNG MIT UNABHÄNGIGEN WERKZEUGANTRIEBSMITTELN
DISPOSITIF PERMETTANT DE GROUPER ET D'ESPACER DES ARTICLES AVEC DES MOYENS DE COMMANDE D'OUTIL INDÉPENDANTS

(30) Priority: 18.08.2006 GB 0616458
(43) Date of publication of application: 13.05.2009
(73) Proprietor: MeadWestvaco Packaging Systems LLC, Richmond, VA 23219-0501 (US)
(72) Inventor: MARTINI, Pascal, Le Poinconnet, 36330 (FR)
(74) Representative: Coulson, Elizabeth Eve
(86) International application number: PCT/US2007/076165
(87) International publication number: WO 2008/022296

(56) References cited:
- EP-A- 0 126 553
- EP-A- 0 761 573
- EP-A- 0 860 385
- WO-A-2007/115085
- JP-A- 62 285 817
- US-A1- 2004 112 714

## Description

### Field of Invention

The present invention relates to the field of metering systems for grouping and spacing articles, which, metering systems comprise tools each of which are driven independently by an independent drive means.

### Background of the Invention

In the packaging industry it is commonplace to require a stream of articles to be grouped prior to them being disposed within corresponding packaging. It is further commonplace to require the groups to be spaced from one another by a predetermined amount so as to coincide with, for example, the spacing of those corresponding packages. Various solutions to these requirements are known in the art and regularly comprise the provision of tools of some kind such as lugs, overhead plungers, or combs, that are each brought into contact with one or more articles and drive those articles so as to accelerate them relative to the stream of articles, and so as to result in a predetermined group size and intergroup spacing.

However, the metering systems provided in the prior art all require a central drive means that is mechanically linked in some way to each and every metering protrusion. This common design characteristic leads to relatively high stresses on the drive means and corresponding mechanical linkages, especially at high through-put rates, and reduces the versatility of the metering system as a whole due to the fact that the individual metering protrusions cannot be controlled truly independently of one another. One possible solution, that has been contemplated in the prior art, is the provision of multiple drive chains, to each of which is attached a selection of tools; each drive means being controlled in concert with one another so as to provide an overall metering system. However, this solution results in a system that is overly complex, since it requires the provision of numerous drive chains that must be carefully aligned to work at high speed. Furthermore, unless a drive chain is provided for each tool, of which there are usually a substantial number, this solution still suffers from the problem of each tool being mechanically linked to at least one other tool and it therefore being impossible to control each tool entirely independently.

A further problem of the prior art relates to the provision, and subsequent maintenance of chains and belts upon which the tools are mounted. Chains are required to be both strong and flexible, and suffer from wear through continual high speed use. A need therefore exists for metering systems that do not require belts or chains that are required to rotate at high speeds.

EP0761573A1 discloses a device for spacing products or product groups fed by a conveyor, which device comprises carriages having a motor and grasping means for grasping the products, and a controller for controlling the grasping elements and motor of the carriages as a function of the spacing which is desired, wherein each carriage is capable of moving independently of each other.

The present invention therefore seeks to overcome or at least to mitigate the problems of the prior art relating to the provision of a metering system whereby each tool may be controlled independently of each other tool and which system may be achieved without undue complexity and cost, and suffer from reduced maintenance requirements.

The technical advantages of such a system will become apparent in the following description but, briefly stated, relate to an increase in flexibility of the system and the possibility of adapting to a variable article and/or carton requirements whilst the overall metering system maintains continuous use. It is further contemplated that such systems may be adapted to be used elsewhere in the packaging line, as would be understood by one skilled in the art, for example the erection of cartons prior or subsequent to loading with articles.

A first aspect of the present invention provides a metering system for grouping and spacing articles that are initially in a stream of articles that passes within a working reach of the metering system, which metering system comprises a plurality of tools, which tools are arranged and adapted to be brought into contact with and subsequently accelerate some portion of the article stream, thereby to create a spaced group, wherein each tool comprises an integral drive means that is controllable independently of the integral drive means of each other tool, wherein the metering system further comprises a cam track that defines a path, wherein each tool comprises a metering protrusion, which protrusion is brought into contact with said some portion of the article stream, which metering protrusions are displacable transversely of a direction of motion of the tool, and wherein the path of the cam track is followed by the metering protrusions of each tool by virtue of a slidable engagement between each metering protrusion and the cam track.

Preferably, a plurality of tools are each mounted upon, and follow the path of, a single fixed track.

Preferably, the metering protrusions comprise combs that are shaped to engage with the profile of a predetermined number of articles, which combs are each reconfigurable to accommodate differing numbers of articles.

Preferably the comb comprises shaped protrusions for insertion between adjacent articles, one or more of which protrusions is slidably mounted to a body portion of the comb such that the spacing between that protrusion and another of the protrusions maybe altered to provide for accommodating differing numbers of articles.

Preferably, the one or more protrusions are slidably mounted by virtue of an extendable stock that slidably extends into said body portion of the tool.

Preferably, the integral drive means is a brushless motor.

Preferably, the motors each comprise integrated control circuitry such that the motors of each tool may be sequentially linked one to the next, and such that every motor may be independently controlled through a connection between any single motor and a central hub.

Optionally, the tools are controllable such that one or more tools serve to retard the velocity of said stream whilst one or more other tools accelerate a group or articles, relative to the retarded velocity of the stream, thereby to create a spacing therebetween.

According to a second aspect of the present invention, there is provided a method of grouping and spacing articles from a stream of articles, which method comprises the steps of bringing a tool of a metering system into contact with one or more articles in said stream, controlling an independent drive means that is integrated into that tool, thereby accelerating said tool so as to accelerate a desired number of articles with respect to the velocity of said stream and conveying said desired number of articles over the working reach of the metering system, wherein the tool comprises a metering protrusion, which protrusion is brought into contact with said desired number of articles, the method further comprising the steps of displacing the metering protrusion of the tool transversely to the direction of motion of the tools, and controlling that transverse displacement of the metering protrusion by a cam track that has a path, some portion of which is offset transversely of a path followed by the tool, and wherein the metering protrusion comprises means to slidably engage with the cam track.

Preferably, the method further comprises retarding the flow of the stream of articles whilst one or more other tools are controlled to accelerate a desired number of articles to form a spaced group.

Preferably, one or more tools are controlled so as to accelerate a desired number of articles relative to the initial velocity of the stream, thereby creating a spaced group.

### Description of the Figures

Various embodiments of the present invention will now be described with reference to the accompanying figures, in which:
Figure 1 illustrates a metering system, according to one embodiment of the present invention, of a brushless motor connected to the body of a tool and the positioning of that tool upon a fixed track, and further illustrating a guide cam for including lateral movement of a slidably mounted comb;
Figures 2a, 2b, 2c illustrate various alternative comb configurations of the tool of Figure 1, which configurations comprise those for accommodating 2, 3 and 4 articles at a time respectively;
Figure 3 represents an isometric elevation of a metering system, according to one embodiment of the present invention, and illustrates the engagement of groups, in this case pairs, of articles with corresponding combs, as the articles pass within a working reach of the metering system;
Figure 4 illustrates the metering system of Figure 3 controlled so as to adapt to a requirement for larger grouper sizes, in this case groups of six articles;
Figure 5 illustrates the metering system of Figure 3, controlled so as to accommodate group sizes of 5 articles, and wherein the combs are shown being employed in pairs, of differing configurations;
Figure 6 illustrates the metering system of Figure 3, wherein one possible arrangement of electrical connections to and between each brushless motor, has been illustrated;
Figure 7 illustrates the metering system of claim 3 wherein the article stream is regulated, and the tools are controlled so as to accelerate each group as soon as the two are brought into contact; and
Figure 8 illustrates the metering system of Figure 3 wherein the article stream is un-regulated, and the tools are controlled such that each group of articles is not accelerated until a subsequent group in the article stream are in contact with a tool so as to retard the velocity of the stream as the initial group is accelerated.

### Detailed Description of the Invention

The present invention relates to a metering system for grouping and spacing articles that are fed within working reach of the metering system in a continuous stream from an infeed source (not illustrated).

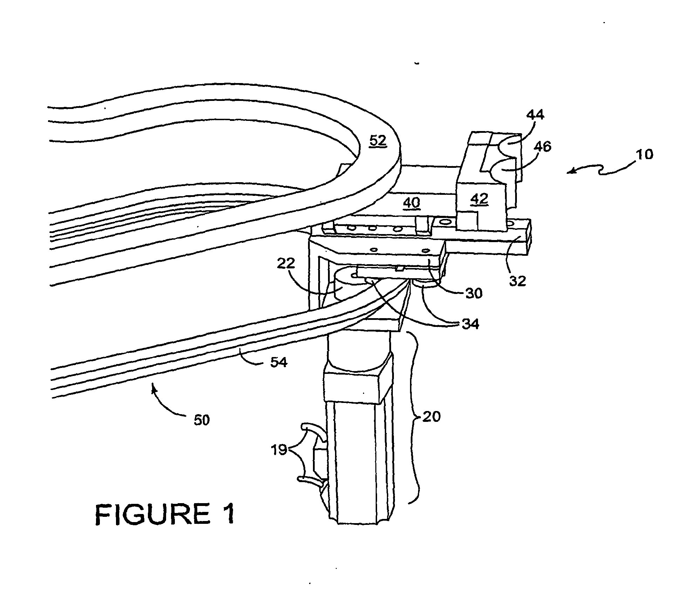

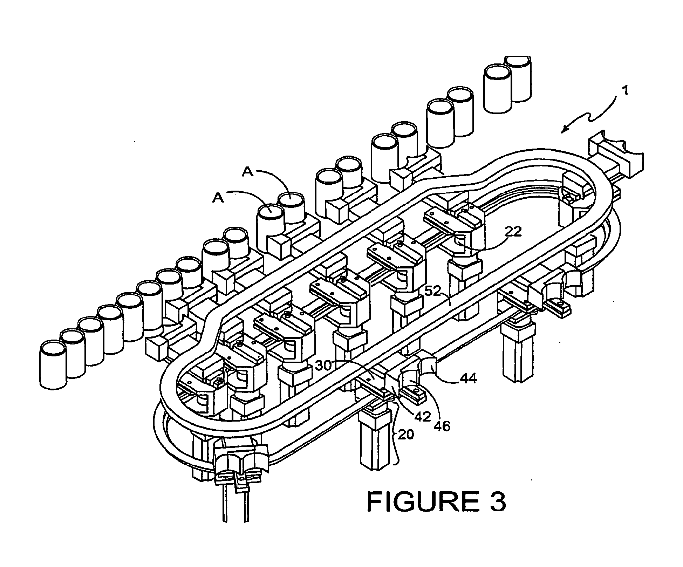

With reference to Figures 1 and 3, the metering system 1 comprises a plurality of tools 10, each mounted upon a track 50. The fixed track 50, is advantageous over metering systems of the prior art, because it does not suffer from problems relating to slackening and is less prone to wear and breakage.

Each tool 10, comprises a body 30, to which is mounted a brushless motor 20. The body 30, of each tool 10, is U-shaped and is disposed upon one side such that the top portion may rest upon the top surface of the fixed track 50, whilst a bottom portion is suspended beneath the fixed track 50. The connecting portion of the U-shape is disposed proximate to the inside of the fixed track 50, though it is contemplated that it may be disposed proximate to the outside of the fixed track 50. Mounted upon an underside of the upper portion of the body 30, are sets of rollers 34 that co-operate with either side of the fixed track 50, to ensure that the tool 10 follows the path of fixed track 50. The body 30, further comprises a stock 32 defined along its uppermost surface, and along which the combs 40, may slide transversely to the direction of motion of the tool 10 around the fixed track 50.

A sprocket 22, is disposed upon a drive shaft (not illustrated) of each brushless motor 20, such that it comes into contact with an outward face 54 of the fixed track 50. The brushless motors 20 are powered and controlled from a central hub that is discussed in greater detail below. As the drive shaft of each motor is caused to rotate, the sprocket 22 engages with teeth (not illustrated) formed in the outward face 54, of the fixed track 50, and thereby causes the tool 10, to slide over the uppermost surface of the fixed track 50. It is contemplated within the scope of the invention that the sprockets 22 may be substituted by wheels that rely on friction, between the wheels and a smooth outer surface of the track 54, rather than the engagement of teeth and sprocket.

The combs 40 comprise a cam follower mechanism (not illustrated) which engages within a shaped cam track 52, such that the comb 40 follows the path of the shaped cam track. The comb comprises shaped heads 42, 44 and 46, which heads collectively define recesses that are complementary to shapes of the articles (A) and with which can be brought into intimate contact.

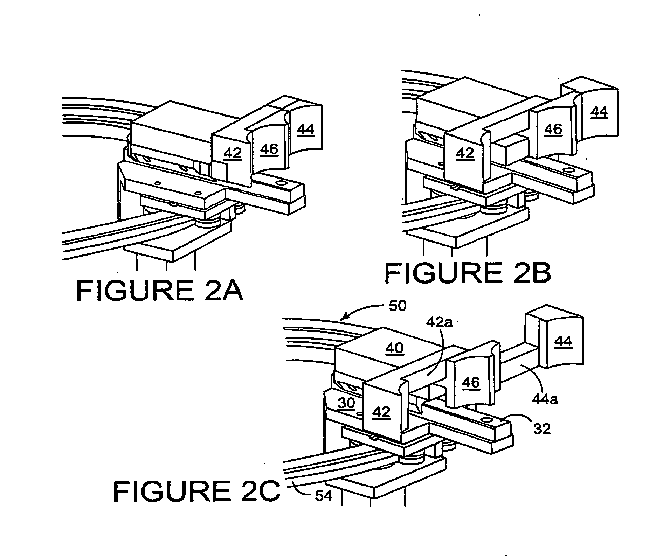

Figures 2a, 2b and 2c each illustrate different configurations of the comb heads 42, 44 and 46. Figure 2c best illustrates the slideable arrangement of those heads whereby shaped head 42, comprises a stock 42a, which allows the shaped head 42, to slide transversely of the longitudinal axis of the comb 40. Similarly, shaped head 44 comprises a stock 44a, which allows shaped head 44 to slide transversely to a longitudinal axis of the stock 32 of the body of the tool 10. Considered in combination, Figures 2a, 2b and 2c illustrate three configurations of the comb 40, arranged to accommodate contact between the comb 40 and groups of two articles, three articles and four articles respectively.

It is contemplated that the combs 40, adapted to be reconfigurable so as to accommodate differing numbers of articles (A), are applicable to other systems. For example, many metering systems known in the art would benefit from the fitment of such combs, so as to allow the production of alternative group sizes and spacings to be achieved without, for example, necessitating the alteration of fixed cam paths.

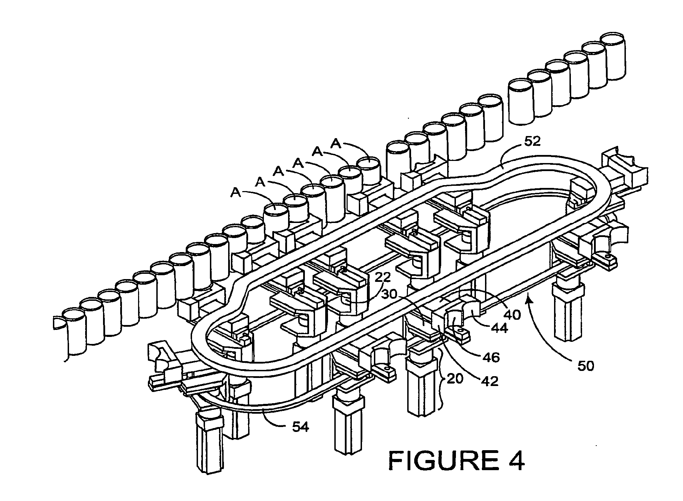

It is contemplated that the metering system may be used in different modes of operation, such that differing article (A) group sizes may be achieved, two possible modes of operation being illustrated, on an exemplary basis, in Figures 3 and 4 respectively.

Figure 3 indicates a mode of operation in which each comb 40 is configured to be brought into contact with two articles (A) (as illustrated in Figure 2a) and each comb 40 is driven independently such that the spacing is created between each pair of articles (A) in contact with each comb 40.

An aspect of the versatility of the metering system 1 is illustrated in Figure 4, wherein each comb 40, whilst configured to be brought into contact with only two articles (A), is operated such that group sizes of six articles (A) are achieved, through use of pairs of combs 40 in concert with one another. One skilled in the art would readily understand from Figure 4 that it is contemplated within the scope of the present invention, that articles (A) may be conveyed by combs 40, without necessarily each needing to be in contact with the heads 42, 42 or 46 of any give comb 40. In the particular case illustrated in Figure 4; two central articles (A) within a group of six articles (A) are not in contact with combs 40, and are instead conveyed through their contact with pairs of articles (A) that are in contact with a comb 40, upstream of the direction of movement of that group of articles (A).

Figures 3 and 4 better illustrate the relationship between the fixed track 50, and the shaped cam track 52. The fixed track 50, is substantially oval in shape in this preferred embodiment, however, the shaped cam track 52, comprises a portion that follows a path closer to and parallel with the stream of articles (A) over the region in which the combs 40 are to be brought in contact with the articles (A). It is contemplated, within the scope of this invention, that the fixed track need not be entirely oval, and may comprise any number of alternative configurations to meet the needs of the specific metering systems. It is further contemplated that the exact shape of the cam shaped cam track 52, may be altered from that illustrated in Figures 3 and 4 to correspondingly.

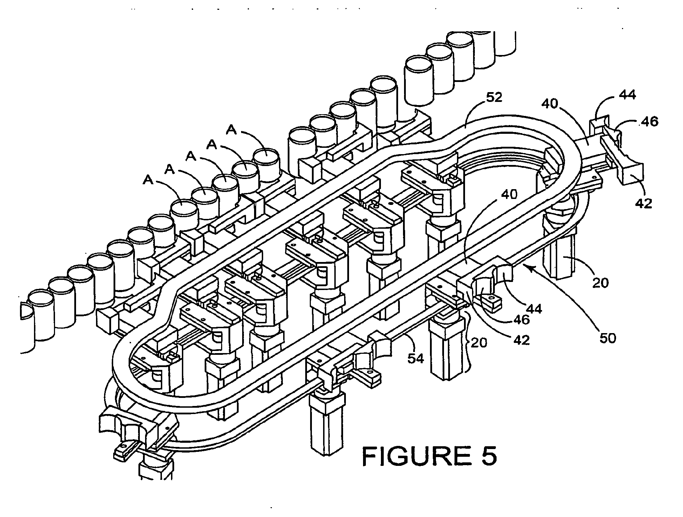

It is contemplated within the scope of the present invention that combs 40 may be used in combination with one another and do not necessarily need to be identically configured. This allows a wider range of article (A) group sizes than would otherwise be possible. Figure 5 illustrates this principal; wherein combs 40 are used in pairs to create group sizes of five articles (A). This may be achieved through reconfiguring one comb 40 of each pair to accommodate three articles, whilst leaving the other comb 40 of the pair in its original state such that it accommodates two articles (A). It is contemplated that there may be multiple solutions to creating any one given group size and the embodiments illustrated in Figures 3, 4 and 5 indicate the flexibility of the metering system 1, with regards to satisfying the requirements of different article group sizes.

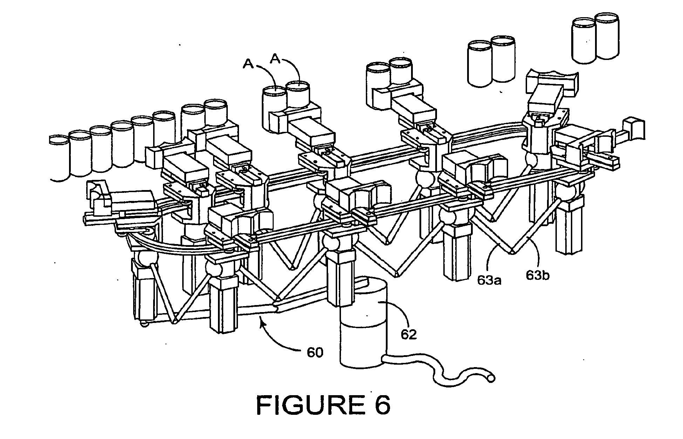

The metering system uses brushless motors 20 to affect locomotion of each tool 10 around the fixed track 50 independently of each other tool 10. The present invention contemplates that a number of different brushless motor products may be suitable for achieving such a technical effect, one of which being the "Indradrive Mi" motor produced by Bosch Rexroth, which motors operate on a single input cable (63) providing control signals and power supply control and allow sequential connection of the motors, one to the next, as is best illustrated in Figure 6. In this way it is possible for a plurality of tools 10, to each be disposed upon the fixed track 50, whilst requiring connection of a control and power supply line 60 to only one of those tools 10. So as to accommodate the mobile nature of the tools, the supply line 60 is pivotably hinged to a central hub 62.

One possible means by which such a sequential connection arrangement between the motors may be achieved, is exemplified in the case of the illustrated embodiment involving the "Indradrive Mi" motors. Each motor is provided with its own integral control circuitry so as to be able to receive and transmit control data over a power supply line. The connection between each adjacent brushless motor 20, may therefore require only a single cable 19 (shown in Figure 1) for input control data and power, and a single output 19 for connection to a subsequent tool 10, which cable may optionally be protected within an articulated cable guard composed of, for example, two parts 63a, 63b, hinged to one another at some central point. Other drive means may be employed, within the scope of the present invention, and it may be that separate control and supply cables need to be run to each such drive means, from the central hub 62.

A further variation that is contemplated, within the scope of this invention, is that wirelessly controllable motors may be integrated into each tool. This would remove any requirement for control wiring either between each motor, or from the hub 62 to each motor. In this case, each tool could comprise a wireless controller system, adapted to decode the wireless control signals and interface with the motor so as to produce the necessary metering system response.

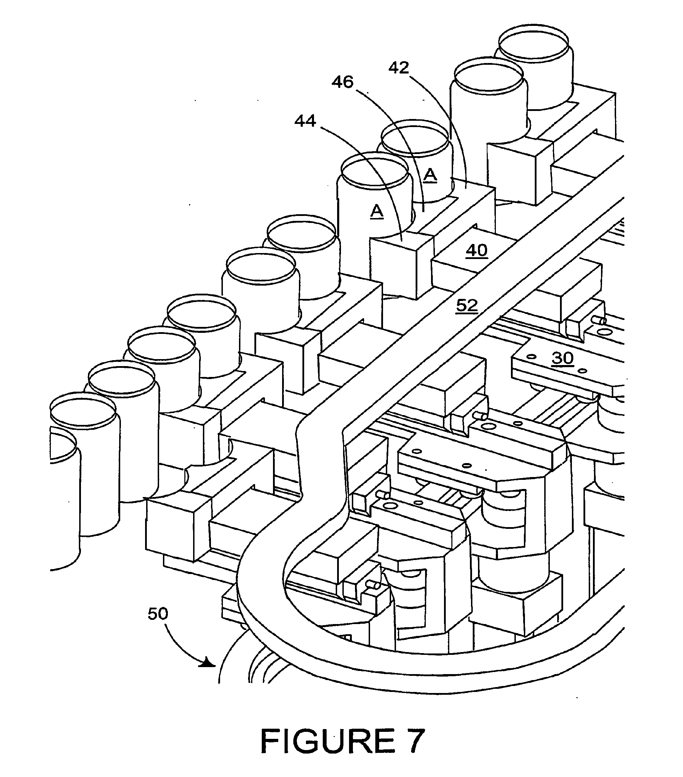

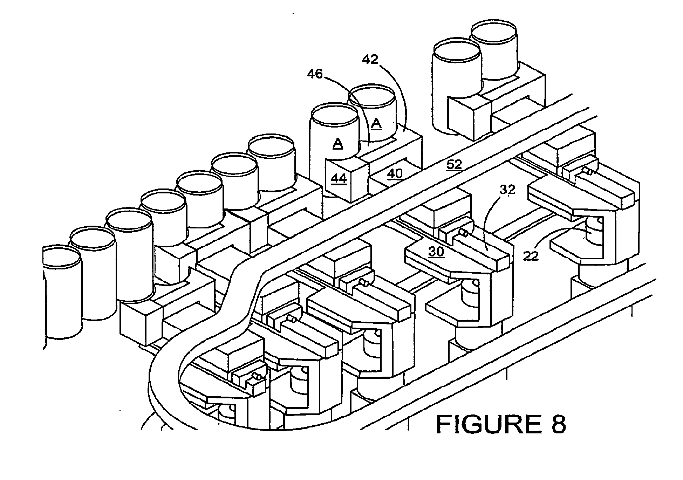

It is contemplated that it is possible to operate the metering system 1 in conjunction with both regulated and unregulated product feeds. Figures 7 and 8 illustrate the way in which this is achieved, wherein Figure 7 illustrates a stream of articles (A) which have been regulated. This means that the velocity of the articles (A) in the stream is substantially matched to the operating speed of the metering system. Therefore, the articles (A) in each group may be spaced from the articles (A) in the stream by bringing the necessary number of tools 10 into contact with the relevant articles (A) of the group and accelerating those articles, relative to the stream velocity.

However, where the stream of articles (A) is unregulated, it is likely to have an overly high velocity, which makes generation of sufficient spacing between a given group and the articles (A) in the stream problematic. To compensate for this, the metering system 1 may be operated such that tools are brought into contact not only with those articles that form the next group, but also with articles (A) that will form the 'head' of the stream as the aforementioned 'next group' of articles is being accelerated. To put this another way; one tool 10 (or set of tools 10) retards the stream velocity, whilst a separate tool (or set of tools) accelerates one or more articles (A) to form a spaced group.

It is contemplated within the scope of the invention as set out by the claims that the exact arrangement of the tools 10 and combs 40 illustrated in the preferred embodiments of the Figures may be altered such that alternative protrusions for metering the articles (A) may be employed and that the exact nature of the fixed track 50 and shaped cam track 52, may also be altered to meet the needs of the specific implementation. It is further contemplated that the illustrative embodiment of the reconfigurable combs 40 may further be adapted to comprise still further article receiving heads 42, 44, 46 such that each comb 40 may be reconfigured to accommodate upwards of five articles (A) each.

Where the preferred embodiment employs a fixed track 50, it is contemplated that the same metering system may be employed using a fixed chain (not illustrated), with which the brushless motor sprockets 22 engage.

## Claims

1. A metering system (1) for grouping and spacing articles (A) that are initially in a stream of articles (A) that passes within a working reach of the metering system (1), which metering system (1) comprises a plurality of tools (10), which tools (10) are arranged and adapted to be brought into contact with and subsequently accelerate some portion of the article stream, thereby to create a spaced group, wherein each tool (10) comprises an integral drive means (20) that is controllable independently of the integral drive means (20) of each other tool, and wherein each tool (10) comprises a metering protrusion (40), which protrusion (40) is brought into contact with said some portion of the article stream, **characterised in that** the metering system (1) further comprises a cam track (52) that defines a path, wherein said metering protrusions (40) are displacable transversely of a direction of motion of the tool (10), and wherein the path of the cam track (52) is followed by the metering protrusions (40) of each tool (10) by virtue of a slidable engagement between each metering protrusion (40) and the cam track (52).

2. The metering system of claim 1 wherein said plurality of tools (10) are each mounted upon, and follow the path of, a single fixed track (50).

3. The metering system of claims 1 to 2 wherein said metering protrusions (40) comprise combs that are shaped to engage with the profile of a predetermined number of articles (A), which combs are each reconfigurable to accommodate differing numbers of articles (A).

4. The metering system according to claim 3, wherein said comb comprises shaped protrusions (42, 44, 46) for insertion between adjacent articles (A), one or more of which protrusions (42, 44, 46) is slidably mounted to a body portion of the comb such that the spacing between that protrusion and another of the protrusions may be altered to provide for accommodating differing numbers of articles (A).

5. The metering system of claim 4 wherein said one or more protrusions (42, 44, 46) are slidably mounted by virtue of an extendable stock (32) that slidably extends into said body portion (30) of the tool (10).

6. The metering system of claims 1 to 5 wherein said integral drive means (20) is a brushless motor.

7. The metering system of claim 6 wherein the motors (20) each comprise integrated control circuitry such that the motors (20) of each tool (10) may be sequentially linked one to the next, and such that every motor (20) may be independently controlled through a connection (19) between any single motor (20) and a central hub (62).

8. The metering system of anyone of claims 1 to 7 wherein the tools (10) are controllable such that one or more tools (10) serve to retard the velocity of said stream whilst one or more other tools (10) accelerate a group or articles (A), relative to the retarded velocity of the stream, thereby to create a spacing therebetween.

9. A method of grouping and spacing articles (A) from a stream of articles (A), which method comprises the steps of bringing a tool (10) of a metering system (1) into contact with one or more articles (A) in said stream, controlling an independent drive means (20) that is integrated into that tool (10), thereby accelerating said tool (10) so as to accelerate a desired number of articles (A) with respect to the velocity of said stream and conveying said desired number of articles (A) over the working reach of the metering system (10), wherein the tool (10) comprises a metering protrusion (40), which protrusion (40) is brought into contact with said desired number of articles (A), **characterised by** displacing the metering protrusion (40) of the tool (10) transversely to the direction of motion of the tool (10) and by controlling that transverse displacement of the metering protrusion (40) by a cam track (52) that has a path, some portion of which is offset transversely of a path followed by the tool (10), and wherein the metering protrusion (40) comprises means to slidably engage with the cam track (52).

10. The method of claim 9 further comprising retarding the flow of the stream of articles whilst one or more other tools (10) are controlled to accelerate a desired number articles (A) to form a spaced group.

11. The method of claims 9 to 10 wherein one or more tools (10) are controlled so as to accelerate a desired number of articles (A) relative to the initial velocity of the stream, thereby creating a spaced group.

## Patentansprüche

1. Dosierungssystem (1) zum Gruppieren und Beabstanden von Gegenständen (A), die sich anfänglich in einem Strom von Gegenständen (A) befinden, der sich innerhalb einer Arbeitsreichweite des Dasierungssystems (1) bewegt, wobei das Dosierungssystem (1) eine Vielzahl von Werkzeugen (10) umfasst, wobei die Werkzeuge (10) angeordnet und ausgestaltet sind, in Berührung mit einem Teil des Gegenstandsstroms gebracht zu werden und anschließend diesen zu beschleunigen, um somit eine beabstandete Gruppe zu erzeugen, wobei jedes Werkzeug (10) eine integrale Antriebseinrichtung (20) umfasst, die unabhängig von der integralen Antriebseinrichtung (20) von jedem anderen Werkzeug gesteuert werden kann, und wobei jedes Werkzeug (10) einen Dosierungsvorsprung (40) umfasst, wobei der Vorsprung (40) in Berührung mit dem besagten Teil des Gegenstandsstroms gebracht wird, **dadurch gekennzeichnet, dass** das Dosierungssystem (1) ferner eine Nockenbahn (52) umfasst, die einen Weg definiert, wobei die Dosierungsvorsprünge (40) quer zu einer Bewegungsrichtung des Werkzeugs (10) verschoben werden können, und wobei der Weg der Nockenbahn (52) von den Dosierungsvorsprüngen (40) von jedem Werkzeug (10) aufgrund einer gleitenden In-Eingriffnahme zwischen jedem Dosierungsvorsprung (40) und der Nockenbahn (52) gefolgt wird.

2. Dosierungssystem nach Anspruch 1, wobei die Vielzahl von Werkzeugen (10) jeweils auf einer einzelnen feststehenden Bahn (50) montiert sind und dem Weg dieser folgen.

3. Dosierungssystem nach Anspruch 1 oder 2, wobei die Dosierungsvorsprünge (40) Kämme umfassen, die geformt sind, das Profil einer vorbestimmten Anzahl von Gegenständen (A) in Eingriff zu nehmen, wobei die Kämme jeweils umkonfiguriert werden können, um eine andere Anzahl von Gegenständen (A) aufzunehmen.

4. Dosierungssystem nach Anspruch 3, wobei der Kamm geformte Vorsprünge (42, 44, 46) für das Einbringen zwischen benachbarte Gegenstände (A) umfasst, wobei einer oder mehrere der Vorsprünge (42, 44, 46) gleitbar an einem Körperabschnitt des Kammes montiert ist, so dass der Abstand zwischen diesem Vorsprung und einem weiteren Vorsprung geändert werden kann, um die Aufnahme einer anderen Anzahl von Gegenständen (A) zu ermöglichen.

5. Dosierungssystem nach Anspruch 4, wobei der eine oder die mehreren Vorsprünge (42, 44, 46) mittels eines ausfahrbaren Ambossklotzes (32) gleitend montiert sind, der sich gleitend in den Körperabschnitt (30) des Werkzeugs (10) erstreckt.

6. Dosierungssystem nach einem der Ansprüche 1 bis 5, wobei es sich bei der integralen Antriebseinrichtung (20) um einen bürstenlosen Motor handelt.

7. Dosierungssystem nach Anspruch 6, wobei die Motoren (20) jeweils eine integrierte Steuerschaltung umfassen, so dass die Motoren (20) von jedem Werkzeug (10) sequenziell einer mit dem anderen verbunden werden können, und so dass jeder Motor (20) über eine Verbindung (19) zwischen jedem einzelnen Motor (20) und einem zentralen Knoten (62) unabhängig gesteuert werden kann.

8. Dosierungssystem nach einem der Ansprüche 1 bis 7, wobei die Werkzeuge (10) derart gesteuert werden können, dass eines oder mehrere der Werkzeuge (10) dazu dienen, die Geschwindigkeit des Stromes zu verzögern, während eines oder mehrere andere Werkzeuge (10) eine Gruppe von Gegenständen (A) beschleunigen, und zwar relativ zu der verzögerten Geschwindigkeit des Stromes, um somit einen Abstand dazwischen zu erzeugen.

9. Verfahren zum Gruppieren und Beabstanden von Gegenständen (A) aus einem Strom von Gegenständen (A), wobei das Verfahren die Schritte des Einbringens eines Werkzeugs (10) eines Dosierungssystems (1) in Berührung mit einem oder mehreren Gegenständen (A) in dem Strom umfasst, des Steuerns einer unabhängigen Antriebseinrichtung (20), die in das Werkzeug (10) integriert ist, um somit das Werkzeug (10) zu beschleunigen, um eine gewünschte Anzahl von Gegenständen (A) hinsichtlich der Geschwindigkeit des Stromes zu beschleunigen und die gewünschte Anzahl von Gegenständen (A) entlang der Arbeitsreichweite des Dosierungssystems (1) zu befördern, wobei das Werkzeug (10) einen Dosierungsvorsprang (40) umfasst, wobei der Vorsprung (40) in Berührung mit der gewünschten Anzahl von Gegenständen (A) gebracht wird, **gekennzeichnet durch** das Verschieben der Dosierungsvorsprünge (40) der Werkzeuge (10) quer zu der Bewegungsrichtung der Werkzeuge (10) und das Steuern der Querbewegung der Dosierungsvorsprünge (40) **durch** eine Nockenbahn (52), die einen Weg aufweist, von dem ein Teil quer zu einem Weg versetzt ist, dem das Werkzeug (10) folgt, und wobei der Dosierungsvorsprung (40) Mittel umfasst, um die Nockenbahn (52) gleitend in Eingriff zu nehmen.

10. Verfahren nach Anspruch 9, wobei das Verfahren ferner den Schritt des Verzögerns des Flusses des Stromes von Gegenständen umfasst, während ein oder mehrere andere Werkzeuge (10) gesteuert werden, eine gewünschte Anzahl von Gegenständen (A) zu beschleunigen, um eine beabstandete Gruppe auszubilden.

11. Verfahren nach Anspruch 9 oder 10, wobei eines oder mehrere Werkzeuge (10) derart gesteuert werden, dass eine gewünschte Anzahl von Gegenständen (A) relativ zu der anfänglichen Geschwindigkeit des Stromes beschleunigt werden, um somit eine beabstandete Gruppe zu erzeugen.

## Revendications

1. Un système de mesure (1) permettant de grouper et d'espacer des articles (A), qui se trouvent initialement dans un flux d'articles (A) passant dans une portée de travail du système de mesure (1), ce système de mesure comprenant une pluralité d'outils (10), ces outils (10) sont agencés et adaptés pour être mis au contact avec et ensuite accélérer une partie du flux d'articles, pour ainsi créer un groupe espacé, dans lequel chaque outil (10) comporte un moyen de commande intégré (20) pouvant être commandé indépendamment du moyen de commande intégré de chaque autre outil, et dans lequel chaque outil (10) comporte une partie saillante de mesure (40), laquelle partie saillante (40) est mise au contact avec ladite une partie du flux d'articles, **caractérisé en ce que** le système de mesure (1) comporte en outre une piste de came (52) qui délimite une trajectoire, dans lequel lesdites parties saillantes de mesure (40) sont susceptibles de se déplacer de manière transversale par rapport à une direction de mouvement de l'outil (10), et dans lequel les parties saillantes de mesure (40) de chaque outil (10) suivent la trajectoire de la piste de came (52) par le biais d'une connexion glissante entre chaque partie saillante de mesure (40) et la piste de came (52).

2. Le système de mesure selon la revendication 1, dans lequel lesdits plusieurs outils (10) sont chacun montés sur, et suivent la trajectoire d'une piste fixe unique (50).

3. Le système de mesure selon les revendications 1 à 2, dans lequel les parties saillantes de mesure (40) comprennent des éléments de peigne qui sont configurés de manière à pouvoir venir en contact avec le profil d'un nombre prédéterminé d'articles (A), ces éléments de peigne sont chacun reconfigurables afin de pouvoir recevoir différents nombres d'articles (A).

4. Le système de mesure selon la revendication 3, dans lequel ledit élément de peigne comprend des parties saillantes (42, 44, 46) en vue de leur insertion entre les articles adjacents (A), où une ou plusieurs parties saillies (42, 44, 46) sont montées coulissantes sur une partie de corps de l'élément de peigne de telle sorte que l'espacement entre cette partie saillante et une autre partie saillante peut être modifié en vue de fournir la possibilité de recevoir différents nombres d'articles (A).

5. Le système de mesure selon la revendication 4, dans lequel lesdites une ou plusieurs parties saillantes (42, 44, 46) sont montées coulissantes par le biais d'un élément en forme de manche extensible (32) qui s'étend de manière coulissante dans ladite partie de corps (30) de l'outil (10).

6. Le système de mesure selon les revendications 1 à 5, dans lequel ledit moyen de commande intégré (20) est un moteur sans balais.

7. Le système de mesure selon la revendication 6, dans lequel les moteurs (20) comportent chacun un circuit de contrôle intégré permettant que les moteurs (20) de chaque outil (10) puissent être séquentiellement liés l'un à l'autre, et que chaque moteur (20) puisse être contrôlé indépendamment par le biais d'une connexion (19) entre tout moteur unique (20) et un moyeu central (62).

8. Le système de mesure selon l'une quelconque des revendications 1 à 7, dans lequel les outils (10) sont contrôlables de telle sorte qu'un ou plusieurs outils (10) servent à retarder la vitesse dudit flux alors qu'un ou plusieurs autres outils (10) accélèrent un groupe d'articles (A), par rapport à la vitesse retardée du flux, et à ainsi créer un espacement entre ceux-ci.

9. Un procédé de regroupement et d'espacement d'articles (A) à partir d'un flux d'articles (A), ce procédé comprend les étapes consistant à mettre un outil (10) d'un système de mesure (1) en contact avec un ou plusieurs articles (A) dans ledit flux, à contrôler un moyen de commande indépendant (20), qui est intégré dans cet outil (10), à accélérer ainsi ledit outil (10) de manière à accélérer un nombre souhaité d'articles (A) par rapport à la vitesse dudit flux et à transporter ledit nombre souhaité d'articles (A) dans la portée de travail du système de mesure (1), dans lequel l'outil (10) comporte une partie saillante de mesure (40), cette partie saillante (40) est mise en contact avec ledit nombre souhaité d'articles a désiré (A), **caractérisé en ce que** les parties saillantes de mesure (40) de l'outil (10) sont déplacées transversalement à la direction du mouvement de l'outil (10), et **en ce que** le déplacement transversal des parties saillantes de mesure (40) est contrôlé par une piste de came (52) qui présente une trajectoire, dont une partie est décalée transversalement par rapport à une trajectoire suivie par l'outil (10), et dans lequel la partie saillante de mesure (40) comporte des moyens en vue de venir en contact coulissant avec la piste de came (52).

10. Le procédé selon la revendication 9, comprenant en outre l'étape consistant à retarder l'écoulement du flux d'articles tandis qu'un ou plusieurs autres outils (10) sont commandés afin de pouvoir accélérer un nombre souhaité d'articles (A) en vue de former un groupe espacé.

11. Le procédé selon les revendications 9 à 10, dans lequel un ou plusieurs outils (10) sont commandés pour pouvoir accélérer un nombre souhaité d'articles (A) par rapport à la vitesse initiale du flux, et pour ainsi créer un groupe espacé.
